# EUROPÄISCHE PATENTSCHRIFT

(11) **EP 2 662 010 B1**
(45) Veröffentlichungstag und Bekanntmachung des Hinweises auf die Patenterteilung: **06.08.2014**
(21) Anmeldenummer: 13179356.4
(22) Anmeldetag: 19.03.2010
(51) Int. Cl.: A47L 9/14, B01D 46/52

(54) **Staubsaugerfilterbeutel**
Vacuum cleaner filter bag
Sac d'aspirateur

(43) Veröffentlichungstag der Anmeldung: 13.11.2013
(62) Teilanmeldung aus: 10002964.4
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker, Kinkeldey, Stockmair & Schwanhäusser

(56) Entgegenhaltungen:
- WO-A1-00/00269
- WO-A1-2006/025249
- DE-A1- 4 227 744
- DE-C1- 19 820 153
- DE-U1-202005 021 300
- DE-U1-202008 003 248

## Beschreibung

Die Erfindung betrifft einen Staubsaugerfilterbeutel mit einer Beutelwand aus Filtermaterial, die eine Durchgangsöffnung aufweist, durch die zu reinigende Luft in den Staubsaugerfilterbeutel einströmen kann.

Staubsaugerfilterbeutel werden heute vorwiegend aus Vliesstoffen gefertigt. Aufgrund ihrer hervorragenden Staubspeicherfähigkeit haben Staubsaugerfilterbeutel aus Vliesstoffen Filterbeutel aus Papier praktisch verdrängt. Die Herstellung der Filterbeutel aus Vliesstoffen unterscheidet sich grundlegend von der Herstellung von Papierbeuteln. Gebräuchlich sind rechteckige Flachbeutel, die aus einer oberen und einer unter Lage gebildet werden, die am Rand umlaufend verschweißt sind. Derartige Filterbeutel sind beispielsweise aus der DE 201 01 466, der EP 0 161 790, der EP 0 639 061, der EP 1 059 056 oder der EP 1 661 500 bekannt.

Aus der WO 00/00269 A1 ist ein Faltenfilter aus mindestens einer Werkstoffbahn aus Fasermaterial wie Vlies, insbesondere mit thermoplastischen Fasern und/oder thermoplastischen Bindemitteln, mit wellenförmigen Auffaltungen, die in Abständen durch Energieeintrag fixiert sind, wobei sich die Auffaltungen in ihren Längsrichtungen in Bereichen überlappen und in den Überlappungsbereichen zumindest stellenweise in Fügezonen fixiert sind.

Die positiven Eigenschaften von Staubsaugerfilterbeuteln aus Vliesstoffen können teilweise aufgrund unzureichender Passform nicht genutzt werden. Daher wurden aufwendige Beutelgeometrien entwickelt, um den im Staubsauger zur Verfügung stehenden Bauraum optimal zu nutzen.

Um ein größeres Füllvolumen im Vergleich zu einem reinen Flachbeutel zu erhalten, werden beispielsweise Flachbeutel mit umlaufender Schweißnaht und ausstülpbaren Seitenfalten verwendet. Derartige Filterbeutel sind beispielsweise aus der DE 20 2005 000 918, der DE 10 2008 006769, der DE 20 2009 012 839 oder der DE 10 2006 023 707 bekannt.

Neben Flachbeuteln finden gelegentlich auch Blockbodenbeutel, auch Klotzbodenbeutel genannt, Verwendung. Blockbodenbeutel aus Vliesstoff sind aufwendig in der Herstellung. Blockbodenbeutel sind beispielsweise aus der DE 20 2005 016309, der DE 20 2007 000 198, der DE 20 2007 017 064, der DE 20 2009 004 433 oder der EP 1 677 660 bekannt.

Um die Staubspeicherfähigkeit der Staubsaugerfilterbeutel zu erhöhen, wurden unterschiedliche Lösungen vorgeschlagen.

Eine Vorfiltration durch lose Fasern wird beispielsweise in der DE 10 2007 060 747, der DE 20 2007 010 692 und der WO 2005/060807 offenbart. Eine Vorabscheidung durch einen Filterbeutel im Filterbeutel wurde durch die WO 2010/000453, die DE 20 2009 002 970 und die DE 20 2006 016 303 offenbart. Strömungsumlenkungen oder Strömungsverteilungen im Filterbeutel werden beispielsweise durch die EP 1 915 938, die DE 20 2008 016 300, die DE 20 2008 007 717, die DE 20 2006 019 108, die DE 20 2006 016 304, die EP 1 787 560 und die EP 1 804 635 vorgeschlagen.

Die DE 10 2007 060 748 offenbart einen Filterbeutel, bei dem das Vliesmaterial zur Ausbildung einer dreidimensional geformten Wandung verstreckt wird.

Die EP 1 982 625 offenbart einen Filterbeutel, wobei das Filtermaterial zumindest bereichsweise verprägt ist und durch eine Profilierung des Filtermaterials die wirksame Filterfläche vergrößert wird. Die Profilierung kann in Form von länglichen parallel zueinander angeordneten Rippen ausgeführt sein. Durch das Einprägen eines Musters werden jedoch die Materialeigenschaften und/oder die Filtrationseigenschaften der verprägten Vliesstofflage verändert.

Die DE 20 2005 010 357 offenbart einen Staubfilterbeutel, wobei die Beutelwandung mindestens eine Lage aus Filtermaterial aufweist, wobei mindestens eine Lage aus gekrepptem Fasermaterial besteht. Dabei können eine Grobfilterlage, eine Feinfilterlage oder alle Lagen des Beutels gekreppt sein. Durch das Kreppen wird die wenigstens eine Lage unregelmäßig zerknittert, wobei das Volumen pro Flächeneinheit der betreffenden Filterlage vergrößert wird. Durch das Kreppen wird das Flächengewicht der Filterlage und damit deren Filtrationseigenschaften verändert.

Filtermaterialien, die zur Vergrößerung der wirksamen Oberfläche gefaltet verwendet werden, wobei die Falten fixiert/stabilisiert werden, sind bekannt. So offenbart beispielsweise die EP 1 080 770 einen zickzackförmig gefalteten Faltenpack aus Vliesstoff, der thermoplastisch verschweißbar ist. Aus der DE 42 27 744 ist zur Stabilisierung der Falten vorgefertigte Streifen bekannt, die mit den Faltenkanten durch Anschmelzen des Streifen- und/oder Filterbahnmaterials verbunden werden. Derartige Filtermaterialien wurden bisher zur Luftfiltration jedoch nicht für Staubsaugerfilterbeutel verwendet.

Trotz der oben genannten Verbesserungen sind einige Probleme von Staubsaugerfilterbeuteln noch nicht befriedigend gelöst. Der Volumenstrom, der durch den Staubsauger gefördert wird, nimmt bei steigendem Füllgrad des Filterbeutels kontinuierlich ab. Die Staubaufnahme, also die Reinigungswirkung, eines Staubsaugers ist mit einem teilgefüllten Staubsaugerbeutel also geringer als mit einem leeren Beutel. Diese Abnahme der Saugleistung ist bei Filterbeuteln mit einem hohen Abscheidgrad besonders stark.

Aufgabe der vorliegenden Erfindung ist es, einen Staubsaugerfilterbeutel bereitzustellen, der eine hohe Staubspeicherfähigkeit aufweist.

Die Erfindung stellt einen Staubsaugerfilterbeutel bereit mit einer Beutelwand aus Filtermaterial, die eine Durchgangsöffnung aufweist, durch die zu reinigende Luft in den Staubsaugerfilterbeutel einströmen kann, wobei die Beutelwand ein wenigstens teilweise plissiertes Vliesstoffmaterial umfasst. Die Falten des plissierten Vliesstoffmaterials sind wenigstens teilweise mittels einer Fixiervorrichtung miteinander verbunden. Durch die Fixiervorrichtung können die Falten des wenigstens teilsweise plissierten Vliesstoffmaterials in einem vorherbestimmten Abstand zueinander gehalten werden. Die Fixiervorrichtung ist zudem wenigstens teilweise mit den Falten des wenigstens teilweise plissierten Vliesstoffmaterials verklebt und/oder verschweißt.

Durch das wenigstens teilweise plissierte Vliesstoffmaterial kann die zur Filtration der zu reinigenden Luft zur Verfügung stehende Fläche vergrößert werden, wodurch eine erhöhte Staubspeicherfähigkeit erreicht wird.

Das plissierte Vliesstoffmaterial weist mehrere, insbesondere zwei oder mehr, vorherbestimmte Falten auf. Mit anderen Worten entspricht das wenigstens teilweise plissierte Vliesstoffmaterial einem wenigstens teilweise gefältelten oder gewellten Vliesstoffmaterial.

Ein Faltenschenkel einer ersten Falte des wenigstens teilweise plissierten Vliesstoffmaterials kann direkt an einen Faltenschenkel einer zweiten Falte des wenigstens teilweise plissierten Vliesstoffmaterials angrenzen. Mit anderen Worten können die Falten des wenigstens teilweise plissierten Vliesstoffmaterials unmittelbar aneinander anschließen oder angrenzen beziehungsweise sich berühren.

Die Falten des plissierten Vliesstoffmaterials können insbesondere zickzackförmig sein. Mit anderen Worten kann eine erste Falte des plissierten Vliesstoffmaterials einer Spiegelung einer zweiten Falte entlang einer senkrechten Ebene zwischen den beiden Falten entsprechen.

Das wenigstens teilweise plissierte Filtermaterial kann insbesondere mehr als 5, 10, 20, 30, 40 oder 50 unmittelbar aneinandergrenzende Falten aufweisen.

Eine oder mehrere der Falten können liegend oder stehend ausgebildet sein. Unter liegenden Falten sind Falten zu verstehen, deren Faltenschenkel im Wesentlichen parallel zu einer Außenfläche der Beutelwand angeordnet sind. Unter stehenden Falten sind Falten zu verstehen, deren Faltenschenkel mit einer Außenfläche der Beutelwand einen Winkel größer 0° und kleiner 180°, insbesondere größer 20° oder größer 45°, einschließen.

Das wenigstens teilweise plissierte Vliesstoffmaterial kann eine oder mehrere Schichten aus Vliesstoffmaterial umfassen.

Die Beutelwand des Staubsaugerfilterbeutels kann eine oder mehrere Schichten aus Vliesstoffmaterial umfassen, insbesondere wobei eine oder mehrere Schichten der Beutelwand ein wenigstens teilweise plissiertes Vliesstoffmaterial umfassen oder aus einem wenigstens teilweise plissierten Vliesstoffmaterial bestehen. Die Beutelwand kann auch aus einer oder mehreren Schichten aus wenigstens teilweise plissiertem Vliesstoffmaterial bestehen.

Eine Beutelwand umfassend wenigstens teilweise plissiertes Vliesstoffmaterial ist von einer Beutelwand mit einer oder zwei Seitenfalten zu unterscheiden. Während "plissiert" eine Eigenschaft des Vliesstoffmaterials der Beutelwand ist, ist eine Seitenfalte ein Merkmal der Beutelwand, das bei der Formgebung des Beutels hergestellt wird.

Eine Beutelwand umfassend wenigstens teilweise plissiertes Vliesstoffmaterial ist auch von einer Beutelwand umfassend ein gekrepptes oder profiliertes Vliesstoffmaterial zu unterscheiden. Im Gegensatz zum Kreppen eines Vliesstoffmaterials oder einer Profilierung des Vliesstoffmaterials durch Verprägen werden die Materialeigenschaften des Vliesstoffmaterials als solches durch das Plissieren nicht verändert. Durch das Plissieren des Vliesstoffmaterials wird lediglich die Anordnung des Vliesstoffmaterials verändert.

Im Gegensatz zum Kreppen werden beim Plissieren außerdem regelmäßige, insbesondere vorherbestimmte, Falten gebildet.

Die Falten des wenigstens teilweise plissierten Vliesstoffmaterials können in einem vorherbestimmten Bereich der Beutelwand, beispielsweise über die gesamte oder über Teilbereiche der zur Filtration der zu reinigenden Luft zur Verfügung stehenden Fläche der Beutelwand, angeordnet sein.

Die Beutelwand kann auch ein vollständig plissiertes Vliesstoffmaterial umfassen oder aus einem vollständig plissierten Vliesstoffmaterial bestehen.

Falten des wenigstens teilweise plissierten Vliesstoffmaterials können sich über die gesamte Länge oder Breite des Staubsaugerfilterbeutels erstrecken. Mit anderen Worten können Falten des wenigstens teilweise plissierten Vliesstoffmaterials, insbesondere ununterbrochen, von einer ersten durch eine Kante gebildeten Seite des Staubsaugerfilterbeutels zu einer zweiten, der ersten Seite gegenüberliegenden, durch eine Kante gebildeten Seite des Staubsaugerfilterbeutels, verlaufen.

Der Staubsaugerfilterbeutel kann als Flachbeutel ausgebildet sein. In diesem Fall kann die Beutelwand eine erste und eine zweite Filtermateriallage umfassen, die durch eine umlaufende Schweißnaht miteinander verbunden sind, wobei die erste und/oder zweite Filtermateriallage das wenigstens teilweise plissierte Vliesstoffmaterial umfassen können.

Die erste und/oder zweite Filtermateriallage können jeweils eine oder mehrere Schichten aus Vliesstoffmaterial umfassen.

Alternativ kann der Staubsaugerfilterbeutel auch als Schlauchbeutel ausgebildet sein. Dabei kann die Beutelwand aus einer Filtermateriallage gefertigt werden, wobei zwei, insbesondere gegenüberliegende, Ränder der Filtermateriallage verbunden werden, wodurch ein Schlauch gebildet wird. Durch Verschließen der offenen Enden des Schlauches durch Querschweißnähte wird ein Schlauchbeutel erhalten. Das Verbinden der Ränder bei der Bildung des Schlauches und/oder das Verschließen der offenen Enden des Schlauches kann durch Ultraschallverschweißen und/oder durch thermisches Verschweißen und/oder durch Verkleben geschehen.

Die Filtermateriallage kann eine oder mehrere Schichten aus Vliesstoffmaterial umfassen.

Die Falten des wenigstens teilweise plissierten Vliesstoffmaterials können eine Faltenhöhe zwischen 3 mm und 100 mm, insbesondere zwischen 3 mm und 50 mm, insbesondere zwischen 5 mm und 15 mm, aufweisen. Die Faltenhöhe kann auch größer als 100 mm sein. Dies kann insbesondere bei großen (Volumen von mehr als 10 Liter), insbesondere gewerblich genutzten, Staubsaugerfilterbeuteln der Fall sein.

Die Falten des plissierten Vliesstoffmaterials können eine Faltenbreite zwischen 3 mm und 100 mm, insbesondere zwischen 3 mm und 50 mm, insbesondere zwischen 5 mm und 15 mm, aufweisen. Die Faltenbreite kann auch größer als 100 mm sein. Dies kann insbesondere bei großen (Volumen von mehr als 10 Liter), insbesondere gewerblich genutzten, Staubsaugerfilterbeuteln der Fall sein.

Wenigstens zwei Falten des plissierten Vliesstoffmaterials können eine voneinander unterschiedliche Faltenhöhe und/oder Faltenbreite aufweisen. Alternativ können alle Falten des wenigstens teilweise plissierten Vliesstoffmaterials gleiche Faltenhöhen und/oder Faltenbreiten aufweisen.

Der Staubsaugerfilterbeutel kann außerdem wenigstens eine Seitenfalte umfassen, insbesondere wobei das plissierte Vliesstoffmaterial in der wenigstens einen Seitenfalte angeordnet ist. Es können also eine oder mehrere Falten des wenigstens teilweise plissierten Vliesstoffmaterials an wenigstens einem Faltenschenkel der wenigstens einen Seitenfalte angeordnet sein.

Wenigstens zwei Falten des plissierten Vliesstoffmaterials können eine voneinander unterschiedliche Faltenform aufweisen.

Die Falten des wenigstens teilweise plissierten Vliesstoffmaterials können jeweils einen ersten und einen zweiten Faltenschenkel umfassen. Der erste und zweite Faltenschenkel können gleich lang oder unterschiedlich lang ausgebildet sein. Eine Kante, an der die Faltenschenkel zusammentreffen, kann durch eine Falzlinie gebildet werden.

Als Materialien für die Beutelwand, insbesondere für das wenigstens teilweise plissierte Vliesstoffmaterial, kommen prinzipiell alle für die Herstellung von Staubsaugerfilterbeuteln bekannten Materialen in Betracht.

Als Vliesstoffmaterial kann ein trocken- oder nassgelegter Vliesstoff oder ein Extrusionsvliesstoff, insbesondere ein schmelzgesponnener Mikrofaserspinnvliesstoff (Meltblownvliesstoff) oder Filamentspinnvliesstoff (Spunbond) verwendet werden. Die Abgrenzung zwischen nassgelegtem Vliesstoffen beziehungsweise Nonwovens und herkömmlichen nassgelegtem Papier erfolgt gemäß der oben genannten Definition, wie sie auch von der International Association Serving the Nonwovens and related Industries (EDANA) verwendet wird. Ein herkömmliches (Filter-) Papier ist also kein Vliesstoff.

Der Vliesstoff kann Stapelfasern oder Endlosfasern umfassen. Fertigungstechnisch können auch mehrere Schichten an Stapelfasern oder Endlosfasern vorgesehen werden, die zu genau einer Schicht Vliesstoff verfestigt werden.

Beispielsweise kann die Beutelwand, insbesondere das wenigstens teilweise plissierte Vliesstoffmaterial, ein Laminat aus Filamentspinnvliesstoff, Meltblownvliesstoff und Filamentspinnvliesstoff (SMS) umfassen. Dieses Laminat kann mittels eines Heißklebers laminiert oder kalandriert sein. Die Schicht aus Meltblownvliesstoff kann gekreppt sein.

Der Begriff Vliesstoff ("Nonwoven") wird gemäß der Definition nach ISO-Standard ISO 9092: 1988 beziehungsweise CEN-Standard EN29092 verwendet. Insbesondere sind die Begriffe Faservlies oder Vlies und Vliesstoff auf dem Gebiet der Herstellung von Vliesstoffen wie folgt gegeneinander abgegrenzt und auch im Sinne der vorliegenden Erfindung so zu verstehen. Zur Herstellung eines Vliesstoffes werden Fasern und/oder Filamente verwendet. Die lockeren oder losen und noch unverbundenen Fasern und/oder Filamente werden als Vlies oder Faservlies (Web) bezeichnet. Durch einen sogenannten Vliesbindeschritt entsteht aus einem derartigen Faservlies schließlich ein Vliesstoff, der eine ausreichende Festigkeit aufweist, um zum Beispiel zu Rollen aufgewickelt zu werden. Mit anderen Worten wird ein Vliesstoff durch die Verfestigung selbstragend ausgebildet. (Details zur Verwendung der hierin beschriebenen Definitionen und/oder Verfahren lassen sich auch im Standardwerk "Vliesstoffe", W. Albrecht, H. Fuchs, W. Kittelmann, Wiley-VCH, 2000 entnehmen.)

Das wenigstens teilweise plissierte Vliesstoffmaterial kann ein Flächengewicht von unter 250 g/m², insbesondere unter 200 g/m², insbesondere zwischen 25 g/m² und 150 g/m², aufweisen.

Das wenigstens teilweise plissierte Vliesstoffmaterial kann aber auch ein Flächengewicht von über 250 g/m² aufweisen. Insbesondere für gewerbliche Staubsaugerfilterbeutel kann dies, je nach mechanischer Anforderung, der Fall sein.

Die Fixiervorrichtung kann anströmseitig oder abströmseitig des wenigstens teilweise plissierten Vliesstoffmaterials angeordnet sein. Anströmseitig bedeutet hier dem Inneren des Staubsaugerfilterbeutels zugewandt, während abströmseitig dem Äußeren des Staubsaugerfilterbeutels zugewandt bedeutet.

Insbesondere kann die Fixiervorrichtung an Stellen angeklebt und/oder angeschweißt sein, an denen Faltenschenkel zweier unterschiedlicher Falten des wenigstens teilweise plissierten Vliesstoffmaterials aneinandergrenzen. Alternativ oder zusätzlich kann die Fixiervorrichtung am Faltenrücken der Falten angeklebt und/oder angeschweißt sein. Als Faltenrücken kann die Kante einer Falte bezeichnet werden, an der die beiden Faltenschenkel der Falte aneinandergrenzen bzw. sich berühren.

Es können auch zwei oder mehr Falten des wenigstens teilweise plissierten Vliesstoffmaterials durch die Fixiervorrichtung miteinander verbunden sein, während zwei oder mehr Falten des plissierten Vliesstoffmaterials nicht durch die Fixiervorrichtung miteinander verbunden sind.

Alternativ oder zusätzlich kann die Fixiervorrichtung derart mit einer oder mehreren Falten des wenigstens teilweise plissierten Vliesstoffmaterials verklebt und/oder verschweißt sein, dass sich die Verbindung im Betrieb des Staubsaugerfilterbeutels löst. Damit kann durch die sich wenigstens teilweise lösende Fixiervorrichtung der Luftstrom innerhalb des Staubsaugerfilterbeutels beeinflusst werden. Mit anderen Worten können Teile der Fixiervorrichtung im Betrieb des Staubsaugerfilterbeutels als Luftverteiler dienen.

Alternativ oder zusätzlich kann der Staubsaugerfilterbeutel wenigstens ein Element zur Strömungsumlenkung oder Strömungsverteilung im Staubsaugerfilterbeutel umfassen. Ein derartiges Element ist beispielsweise aus der EP 1 787 560 oder der EP 1 804 635 bekannt. Beispielsweise kann ein solches Element in Form von wenigstens einem, im Inneren des Staubsaugerfilterbeutels, an der Beutelwand angebrachten Materialstreifen ausgebildet sein.

Die Fixiervorrichtung kann derart ausgebildet sein, dass es die Faltenbreite der Falten, die durch das Fixierelement miteinander verbunden werden, im Betrieb des Staubsaugerfilterbeutels konstant hält.

Alternativ oder zusätzlich kann die Fixiervorrichtung ein vorherbestimmtes Dehnungsverhalten aufweisen. Mit anderen Worten kann die Fixiervorrichtung derart ausgebildet sein, dass die Faltenbreite der durch die Fixiervorrichtung verbundenen Falten im Betrieb des Beutels durch Dehnung der Fixiervorrichtung vergrößert werden können. Die Fixiervorrichtung kann eine Elastizität aufweisen, die derart gewählt ist, dass die Fixiervorrichtung nach dem Betrieb des Staubsaugerfilterbeutels, also nach Abschalten des Staubsaugers, wieder in ihre ursprüngliche Form zurückkehrt.

Die Fixiervorrichtung kann auch teilweise, insbesondere in Teilbereichen, durch dehnbare Materialstreifen und teilweise, insbesondere in anderen Teilbereichen, durch nicht dehnbare Materialstreifen gebildet werden.

Die Fixiervorrichtung kann wenigstens einen Materialstreifen, insbesondere einen Vliesstoffmaterialstreifen, umfassen. Mehrere Materialstreifen können beabstandet zueinander angeordnet sein oder direkt aneinander angrenzen.

Mehrere Materialstreifen können quer, insbesondere senkrecht oder unter einem vorherbestimmten Winkel, zur Längsrichtung der Falten verlaufen. Der vorherbestimmte Winkel kann größer als 0° und kleiner als 180°, insbesondere größer als 30° und kleiner als 150°, sein.

Das Material der Fixiervorrichtung kann eine hohe Luftdurchlässigkeit aufweisen. Wenn das Material der Fixiervorrichtung luftundurchlässig ist, kann die Fixiervorrichtung gelocht und/oder geschlitzt ausgebildet sein.

Die Fixiervorrichtung kann in Form wenigstens eines durchgehenden Klebstoffstreifens ausgebildet sein. Als Klebstoff kann insbesondere ein Schmelzklebstoff (Hotmelt) verwendet werden.

Der wenigstens eine Materialstreifen kann eine Breite von 0,5 cm bis 4 cm, insbesondere von 1 cm bis 3 cm, beispielsweise 2 cm aufweisen. Der wenigstens eine Materialstreifen kann eine Dicke von 0,1 mm bis 10 mm, insbesondere von 0,3 mm bis 4 mm, aufweisen.

Die Fixiervorrichtung kann in Form von einem oder zwei Materialstreifen ausgebildet sein, deren Breite und/oder Länge der Breite und/oder Länge der Beutelwand entsprechen. Mit anderen Worten kann die Fixiervorrichtung vollflächig ausgebildet sein.

Die Fixiervorrichtung kann ein Vliesstoffmaterial, eine Folie und/oder ein Papier umfassen.

Als Vliesstoffmaterial für die Fixiervorrichtung sind beispielsweise Filamentspinnvliesstoffe, kardierte oder Airlaid Vliesstoffe und/oder Laminate aus mehreren Vliesstoffen möglich. Bei Laminaten aus mehreren Vliesstoffen können die unterschiedlichen Vliesstoffschichten einen Gradienten im Porendurchmesser aufweisen.

Die Fixiervorrichtung kann auch in Form eines Gewebes oder eines Netzes ausgebildet sein. Insbesondere kann die Fixiervorrichtung in Form eines extrudierten Netzes ausgebildet sein. Die Maschenweite des Netzes kann dabei zwischen 0,5 mm und 10 cm, insbesondere zwischen 3 mm und 6 mm, liegen. Die Form der Löcher des Netzes kann quadratisch oder rechteckig sein. Es können auch ein oder mehrere Löcher des Netzes quadratisch und ein oder mehrere Löcher des Netzes rechteckig sein.

Die Fixiervorrichtung kann auch Filamente, Taue und/oder Garne umfassen.

Die Fixiervorrichtung kann auch einer Halteplatte des Staubsaugerfilterbeutels entsprechen. Mit anderen Worten können die Falten des wenigstens teilweise plissierten Vliesstoffmaterials wenigstens teilweise mittels der Halteplatte des Staubsaugerfilterbeutels miteinander verbunden sein.

Zwei oder mehr Falten des wenigstens teilweise plissierten Vliesstoffmaterials können auch nicht durch eine Fixiervorrichtung miteinander verbunden sein, also jeweils eine veränderliche Faltenbreite aufweisen. Im Betrieb des Stabsaugerfilterbeutels kann sich der Staubsaugerfilterbeutel in Abhängigkeit vom umgebenden Staubsaugergehäuse entfalten. Unverbundene Falten des plissierten Vliesstoffmaterials können sich im Betrieb an das umgebende Gehäuse anpassen. Damit kann eine verbesserte Raumausnutzung erreicht werden.

Durch eine vorherbestimmte Kombination von einem oder mehreren Bereichen des wenigstens teilweise plissierten Vliesstoffmaterials, in dem die Falten nicht fixiert sind, und einem oder mehreren Bereichen des plissierten Vliesstoffmaterials, in denen die Falten fixiert sind, kann eine Anpassung an die Geometrie eines Bauraums eines Staubsaugers optimiert werden.

Ein Vliesstoffmaterial des Fixierelements kann ein Flächengewicht von 10 g/m² bis 30 g/m² aufweisen.

Die Fixiervorrichtung kann auch als Vorfilterschicht ausgeführt sein. Mit anderen Worten kann die Fixiervorrichtung selbst als Filterschicht ausgebildet sein. In diesem Fall kann das Flächengewicht der Fixiervorrichtung kleiner als 100 g/m² sein. Beispielsweise kann die Fixiervorrichtung einem Laminat aus einem oder mehreren Filamentspinnvliesstoffen und einem oder mehreren schmelzgesponnener Mikrofaserspinnvliesstoff entsprechen, insbesondere wobei der wenigstens eine schmelzgesponnene Mikrofaserspinnvliesstoff elektrostatisch geladene Fasern umfasst.

In einem durch die Fixiervorrichtung und den Faltenschenkeln wenigstens einer Falte des wenigstens teilweise plissierten Vliesstoffmaterials gebildeten Hohlraum, können Fasern und/oder Absorbentien angeordnet sein. Die Fasern können insbesondere elektrostatisch geladene Fasern sein. Dadurch kann eine weitere Filterwirkung erreicht werden. Die Fasern können beschichtet sein. Als Absorbentien können beispielsweise poröse Polymere und/oder Aktivkohle verwendet werden. Absorbentien auf Basis beschichteter Polymerfasern sind beispielsweise durch die DE 10 2004 009 956 und die EP 1 725 153 offenbart. Als poröses Polymer kann beispielsweise das vernetzte SDVB (Styroldivinylbenzol) verwendet werden. Als Absorbentien können auch imprägnierte Aktivkohle, funktionalisierter Kohlenstoff, hydrophobe Zeolithe, hydrophobe, poröse Polymere, Bentonite und/oder kristalline metallorganische Komplexe verwendet werden.

Die Beutelwand, insbesondere das wenigstens teilweise plissierte Vliesstoffmaterial und/oder die Fixiervorrichtung, kann wenigstens teilweise elektrostatisch aufgeladen sein. Es können die Fasern des Vliesstoffmaterials vor dem Verfestigen und/oder der Vliesstoff, also nach dem Verfestigen, elektrostatisch aufgeladen werden.

Die elektrostatische Ladung kann beispielsweise durch ein Koronaverfahren erreicht werden. Dabei wird das Vlies oder der Vliesstoff zentriert in einem etwa 3,8 cm (1,5 inches) bis 7,6 cm (3 inches) breitem Bereich zwischen zwei Gleichspannungselektroden für eine Koronaentladung vorbeigeführt. Dabei kann eine der Elektroden eine positive Gleichspannung von 20 bis 30 kV aufweisen während die zweite Elektrode eine negative Gleichspannung von 20 bis 30 kV aufweist.

Alternativ oder zusätzlich kann die elektrostatische Ladung gemäß der Lehre der US 5,401,446 erzeugt werden.

Der Staubsaugerfilterbeutel kann ein Flachbeutel sein. Mit anderen Worten kann der Staubsaugerfilterbeutel derart ausgebildet sein, dass er keinen Klotzboden oder Blockboden aufweist.

Alternativ kann der Staubsaugerfilterbeutel auch als Klotzbodenbeutel ausgebildet sein. Als Klotzboden wird ein gefalteter Boden bezeichnet, dessen Aufgabe üblicherweise darin besteht, den Filterbeutel zu stabilisieren und einen dreidimensionalen Beutel zu bilden. Ein Beispiel für einen Blockbodenfilterbeutel ist aus der DE 20 2005 016 309 bekannt.

Der Staubsaugerfilterbeutel kann insbesondere ein Wegwerfstaubsaugerfilterbeutel sein.

Der Filterbeutel kann außerdem eine Halteplatte, die zur Fixierung des Staubsaugerfilterbeutels in einer Kammer eines Staubsaugers dient und im Bereich der Einströmöffnung angeordnet ist, umfassen. Die Halteplatte kann insbesondere aus einem Kunststoff gefertigt sein. Die Halteplatte kann mit der Beutelwand verbunden sein und im Bereich der Einströmöffnung ein Durchgangsloch aufweisen.

Die Einströmöffnung und die Halteplatte können beliebig auf der Oberfläche der Beutelwand des Staubsaugerfilterbeutels positioniert werden. Beispielsweise können die Einströmöffnung und die Haltplatte zentriert auf dem Staubsaugerfilterbeutel angeordnet werden.

Weitere Merkmale und Vorteile der Erfindung werden nachfolgend anhand der beispielhaften Figuren erläutert. Dabei zeigt

Figur 1 einen beispielhaften Staubsaugerfilterbeutel;
- Figur 2: eine Draufsicht auf eine Innenseite eines beispielhaften Staubsaugerfilterbeutels;
- Figur 3: eine Draufsicht auf eine Innenseite eines weiteren beispielhaften Staubsaugerfilterbeutels;
- Figur 4: einen Querschnitt durch einen Teilbereich eines beispielhaften Stausaugerfilterbeutels;
- Figur 5: einen Querschnitt durch einen Teilbereich eines weiteren beispielhaften Staubsaugerfilterbeutels;
- Figur 6: einen Querschnitt durch einen Teilbereich eines weiteren beispielhaften Staubsaugerfilterbeutels;
- Figur 7: einen Querschnitt durch einen Teilbereich eines weiteren beispielhaften Staubsaugerfilterbeutels;
- Figur 8: eine Draufsicht auf die Rückseite eines beispielhaften Staubsaugerfilterbeutels; und
- Figur 9: ein illustratives Diagramm, in dem der Volumensstrom durch die Beutelwand von beispielhaften Staubsaugerfilterbeuteln in Abhängigkeit von der darin gespeicherten Staubmasse dargestellt ist.

Für die Bestimmung der oben und im Folgenden beschriebenen Parameter werden die folgenden Verfahren verwendet.

Die Luftdurchlässigkeit wird gemäß DIN EN IS09237:1995-12 bestimmt. Insbesondere wird mit einem Differenzdruck von 200 Pa und einer Prüffläche von 20 cm² gearbeitet. Für die Bestimmung der Luftdurchlässigkeit wurde das Luftdurchlässigkeitsprüfgerät FX3300 der Texttest AG verwendet.

Das Flächengewicht wird gemäß DIN EN 29073-1: 1992-08 bestimmt. Für die Bestimmung der Dicke einer oder mehrerer Vliesstoffschichten wird das Verfahren gemäß Norm DIN EN ISO 9073-2: 1997-02 eingesetzt, wobei das Verfahren A verwendet wird.

Die Penetration (NaCl-Durchlässigkeit) wird mittels einem TSI 8130 Testgeräts bestimmt. Insbesondere wird 0,3 µm Natriumchlorid bei 86 l/min verwendet.

Die Faltenbreite kann als mittlerer Abstand zwischen zwei benachbarten Falten, insbesondere zwischen den Faltenrücken zweier aneinandergrenzender Falten, bestimmt werden. Wenn die Falten durch ein Fixierelement verbunden sind kann die Faltenbreite dem mittleren Abstand der Verbindungspunkte einer ersten Falte zu den Verbindungspunkten einer zweiten, angrenzenden Falte entsprechen.

Die Faltenhöhe einer Falte kann als Normalabstand des Faltenrückens von einer Ebene in der die Kanten der beiden Faltenschenkel liegen, die dem Faltenrücken gegenüber liegen, bestimmte werden. Bei liegenden Falten kann die Faltenhöhe einer Falte als mittlere Länge der Faltenschenkel bestimmt werden. Dazu kann die Ausdehnung einer Falte senkrecht zur Längsrichtung der Falte, also senkrecht zur Richtung in der der Faltenrücken verläuft, gemessen werden und die gemessene Ausdehnung halbiert werden.

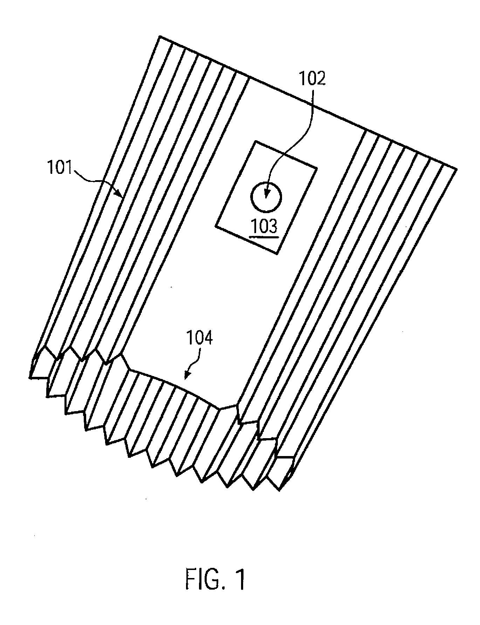

Figur 1 zeigt einen beispielhaften Staubsaugerfilterbeutel, bei dem zu Illustrationszwecken eine Seite geöffnet dargestellt ist. Tatsächlich wird die hier geöffnet dargestellte Seite durch eine Schweißnaht gebildet.

Der beispielhafte Staubsaugerfilterbeutel der Figur 1 umfasste eine Beutelwand aus wenigstens teilweise plissiertem Vliesstoffmaterial. Das wenigstens teilweise plissierte Vliesstoffmaterial umfasst eine Mehrzahl, insbesondere mehr als zwei, Falten 101. Die Falten 101 sind insbesondere stehende Falten.

Im Bereich 104 weist die Beutelwand keine Falten auf. In diesem Bereich 104 ist das Vliesstoffmaterial also nicht plissiert. Der beispielhafte Staubsaugerfilterbeutel der Figur 1 umfasst außerdem eine Einströmöffnung 102, durch die zu reinigende Luft in den Staubsaugerfilterbeutel einströmen kann, sowie eine Halteplatte 103, die zur Fixierung des Staubsaugerfilterbeutels in einer Kammer eines Staubsaugers dient, und im Bereich der Einströmöffnung 102 ein Durchgangsloch aufweist.

Die Falten 101 des teilweise plissierten Vliesstoffmaterials sind im beispielhaften Staubsaugerfilterbeutel der Figur 1 entlang der gesamten Länge des Staubsaugerfilterbeutels ausgebildet. Je nach Orientierung der Halteplatte 103, kann der Staubsaugerfilterbeutel eine Längsseite und eine Breitseite aufweisen. Die Falten 101 können sich entlang der Längsseite oder entlang der Breitseite erstrecken, insbesondere entlang der gesamten Längsseite oder Breitseite.

Im Fall des beispielhaften Staubsaugerfilterbeutels der Figur 1 ist ein Bereich 104 der Beutelwand frei von Falten. Alternativ können sich Falten des wenigstens teilweise plissierten Vliesstoffmaterials jedoch auch auf der gesamten Beutelwand befinden.

Die Beutelwand kann insbesondere zwei oder mehr Filterschichten aufweisen, wobei wenigstens eine Schicht ein wenigstens teilweise plissiertes Vliesstoffmaterial umfasst.

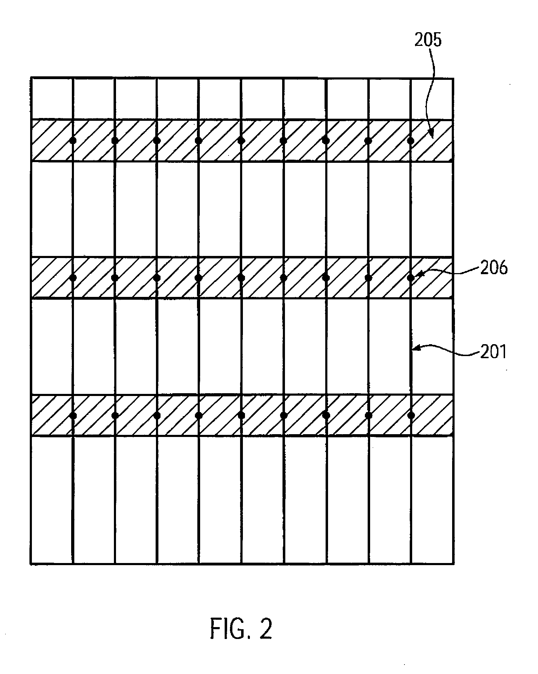

Figur 2 zeigt eine Draufsicht auf eine Innenseite einer Beutelwand eines beispielhaften Staubsaugerfilterbeutels. Die Falten 201 des wenigstens teilweise plissierten Vliesstoffmaterials sind in diesem Beispiel durch eine Fixiervorrichtung in Form von mehreren Materialstreifen 205 miteinander verbunden. Insbesondere werden die Falten 201 durch die Materialstreifen 205 in einem vorherbestimmten Abstand zueinander gehalten. Mit anderen Worten wird die Faltenbreite der Falten 201 durch die Materialstreifen 205 fixiert. Die Materialstreifen 205 sind an Verbindungspunkten 206 mit den Falten 201, insbesondere mit einer Kante der Falten 201, verbunden, beispielsweise verklebt oder verschweißt.

Die Materialstreifen 205 können beispielsweise eine Breite von 0,5 cm bis 4 cm, insbesondere von 1 cm bis 3 cm, beispielsweise 2 cm aufweisen.

Die Materialstreifen 205 können ein Vliesstoffmaterial umfassen. Das Vliesstoffmaterial kann insbesondere Extrusionsvliesstoff, beispielsweise einen Filamentspinnvliesstoff, und/oder einen kardierten oder Airlaid Vliesstoff umfassen. Die Materialstreifen 205 können auch ein Laminat aus mehreren Vliesstoffen, insbesondere ein Laminat aus Filamentspinnvliesstoff - schmelzgesponnener Mikrofaserspinnvliesstoff - Filamentspinnvliesstoff umfassen.

Das Flächengewicht der Materialstreifen 205 kann kleiner als 200 g/m², insbesondere zwischen 10 g/m² und 30 g/m², sein.

Einige der Verbindungspunkte 206 können derart ausgebildet sein, dass sich die Verbindung im Betrieb des Staubsaugerfilterbeutels löst. Durch die wenigstens teilweise gelösten Materialstreifen 205 kann das Strömungsverhalten der in den Beutel einströmenden Luft beeinflusst werden.

Die Materialstreifen 205 können auch ein vorherbestimmtes Dehnverhalten aufweisen. Damit kann eine vorherbestimmte Ausdehnung des Beutels im Betrieb erreicht werden. Die Materialstreifen 205 können auch eine Elastizität aufweisen, so dass sich die Ausdehnung des Beutels nach dem Betrieb, also nach Ausschalten des Staubsaugers, durch elastische Rückstellkräfte wieder verringert wird. Dadurch kann auch Staub von der Beutelwand in das Innere des Staubsaugerfilterbeutels befördert werden.

Alternativ zu mehreren Materialstreifen 205 kann das Fixierelement auch als ein vollflächiger Materialstreifen ausgebildet sein. In diesem Fall kann das Fixierelement eine hohe Luftdurchlässigkeit aufweisen, insbesondere mehr als 5000 l/(m²s).

Das Fixierelement kann auch ein luftdurchlässiges Papier, Gewebe und/oder eine Folie umfassen. Um die Luftdurchlässigkeit zu erhöhen, kann die Fixiereinrichtung auch gelocht und/oder geschlitzt sein.

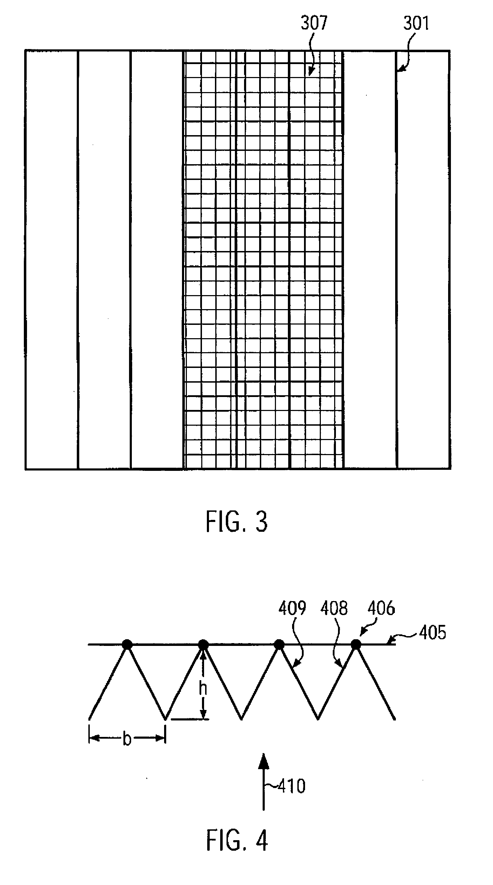

Figur 3 zeigt eine Draufsicht auf eine Innenseite einer Beutelwand eines weiteren beispielhaften Staubsaugerfilterbeutels. In diesem Fall ist die Fixiervorrichtung in Form eines Netzes 307 ausgebildet, der in einem Teilbereich der Oberfläche die Falten 301 des plissierten Vliesstoffmaterials miteinander verbindet. In anderen Bereichen der Oberfläche sind die Falten des plissierten Vliesstoffmaterials nicht durch die Fixiervorrichtung verbunden. Durch eine derartige teilweise Fixierung der Falten kann eine optimale Anpassung des Staubsaugerfilterbeutels an den Bauraum des Staubsaugers im Betrieb erreicht werden.

Figur 4 zeigt einen Querschnitt durch einen Teilbereich der Beutelwand eines beispielhaften Staubsaugerfilterbeutels, wobei der Querschnitt senkrecht zum Verlauf der Falten des plissierten Vliesstoffmaterials verläuft. Insbesondere zeigt Figur 4 mehrere Falten des wenigstens teilweise plissierten Vliesstoffmaterials einer Beutelwand eines beispielhaften Staubsaugerfilterbeutels, die durch eine Fixiervorrichtung 405 miteinander verbunden sind. Insbesondere ist die Fixiervorrichtung 405 an Verbindungspunkten 406 mit den Faltenrücken der Falten verbunden. Der Pfeil 410 deutet die Anströmrichtung der Beutelwand mit der zu reinigenden Luft an. In diesem Beispiel ist die Fixiervorrichtung 405 also abströmseitig des wenigstens teilweise plissierten Vliesstoffmaterials angeordnet.

Figur 4 zeigt außerdem einen Faltenschenkel 409 einer ersten Falte und einen Faltenschenkel 408 einer zweiten Falte, die direkt oder unmittelbar aneinander angrenzen.

Figur 4 illustriert außerdem die Faltenbreite b und die Faltenhöhe h. Die Faltenhöhe h und/oder die Faltenbreite b können zwischen 3 mm und 100 mm, insbesondere zwischen 5 mm und 15 mm, liegen.

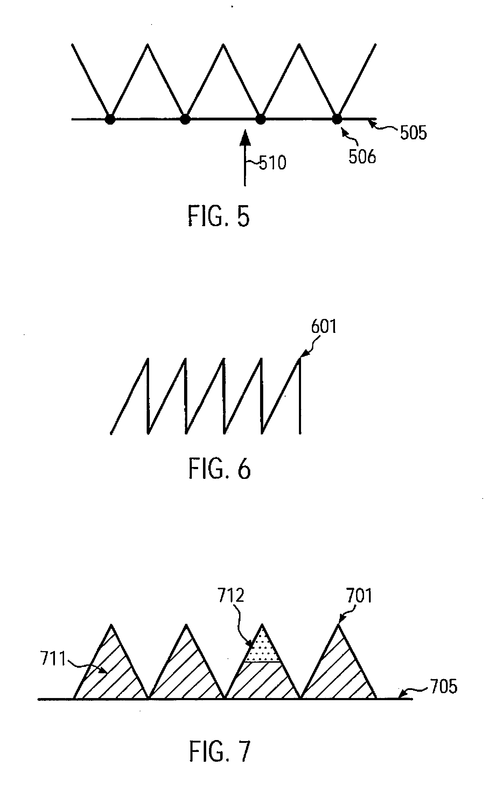

Figur 5 zeigt einen weiteren Querschnitt durch einen Teil einer Beutelwand eines beispielhaften Staubsaugerfilterbeutels. Insbesondere sind mehrere Falten 501 gezeigt und eine bezüglich der Anströmrichtung 510 anströmseitig angeordnete Fixiervorrichtung 505, die an Verbindungspunkten 506 mit den Falten 501 verbunden sind.

In den Figuren 4 und 5 weisen die Falten im Querschnitt die Form eines gleichschenkligen Dreiecks auf. Die Form der Falten kann jedoch beliebig gewählt werden.

Figur 6 beispielsweise zeigt einen Querschnitt durch einen Teilsbereich einer Beutelwand eines beispielhaften Staubsaugerfilterbeutels, bei welchem die Falten 601 im Querschnitt unterschiedlich lange Faltenschenkel aufweisen.

Insbesondere wenn zur Fixierung der Falten eine vollflächige, luftdurchlässige Fixiervorrichtung verwendet wird, können die gebildeten Hohlräume zwischen den Falten und der Fixiervorrichtung mit Fasern, insbesondere elektrostatisch geladenen Fasern, und/oder mit Absorbentien gefüllt werden. Als Absorbentien können beispielsweise beschichtete Fasern, Aktivkohle und/oder poröse Polymere verwendet werden.

Figur 7 zeigt einen Querschnitt eines Teilbereichs einer derartigen Beutelwand. Insbesondere sind mehrere Falten 701 gezeigt und eine damit verbundene Fixiervorrichtung 705. In den Hohlräumen zwischen den Faltenschenkeln und der Fixiervorrichtung 705 sind Fasern 711 und/oder Aktivkohle 712 angeordnet.

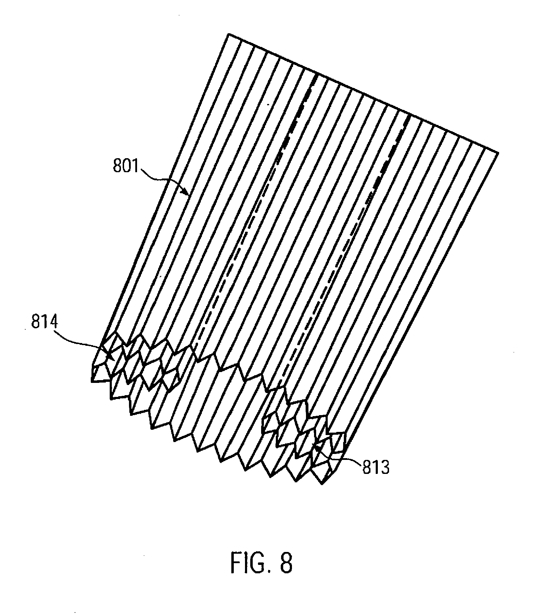

Figur 8 zeigt einen beispielhaften Staubsaugerfilterbeutel, insbesondere in einer Draufsicht auf eine Außenseite des Staubsaugerfilterbeutels. Die Beutelwand umfasst eine Vielzahl von Falten 801. Der Staubsaugerfilterbeutel umfasst außerdem zwei Seitenfalten 813 und 814, wobei die Seitenfalten 813 und 814 ebenfalls ein wenigstens teilweise plissiertes Vliesstoffmaterial umfassen. Mit anderen Worten sind Falten 801 des wenigstens teilweise plissierten Vliesstoffmaterials an den Faltenschenkeln der Seitenfalten 813 beziehungsweise 814 angeordnet. Die Seitenfalten 813 und 814 können teilweise oder vollständig ausstülpbar sein.

Durch Verwendung eines wenigstens teilweise plissierten Vliesstoffmaterials lässt sich die zur Filtration verfügbare Fläche bei vorgegebenen Abmessungen des Staubsaugerfilterbeutels vergrößern. Dies führt zu einer hohen Abscheideleistung bei geringem Anfangsdruckverlust. Damit einher geht eine niedrigere Mediendurchtrittsgeschwindigkeit, was die Abscheideleistung, insbesondere durch elektrostatisch geladene Fasern der Beutelwand, erhöht.

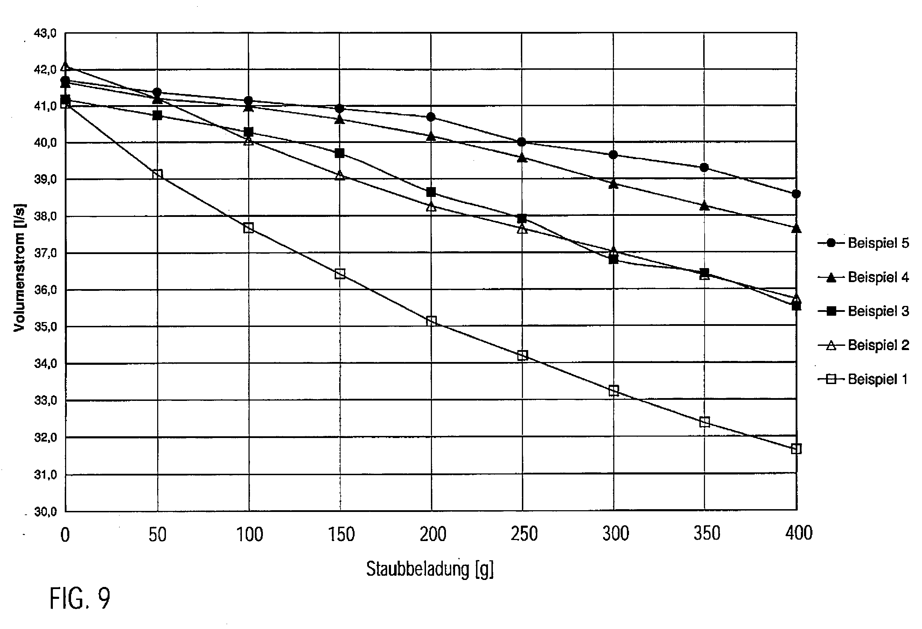

Durch die größere Fläche kann auch eine höhere Staubspeicherfähigkeit erreicht werden. Figur 9 dient der Illustration und zeigt ein Diagramm, in dem der Volumensstrom durch die Beutelwand von Staubsaugerfilterbeuteln in Abhängigkeit von der Staubbeladung in Gramm dargestellt ist. Die Beutelwand besteht jeweils aus einem Laminat aus Filamentspinnvliesstoff (Spinnvlies) und Meltblownvliesstoff. Die entsprechenden Messungen wurden mit einem Staubsauger des Modells "Miele S 5210" durchgeführt.

Beispiel 1: Entspricht einer Beutelwand gemäß dem Stand der Technik, also ohne ein wenigstens teilweise plissiertes Vliesstoffmaterial. Die Beutelmaße betragen (L x B) 300 mm x 320 mm. Das SMMS bestehet aus Spinnvlies 35 g/m², 2 x 20 g/m² Meltblownvliesstoff und Spinnvlies 17 g/m²_{.}

Beispiel 2: Entspricht einer Beutelwand umfassend ein vollständig plissiertes Vliesstoffmaterial. Die Faltenhöhe beträgt 12 mm. Die Beutelmaße (L x B) betrug 300 x 630 mm (ausgefaltet). Das SMMS bestehet aus Spinnvlies 35 g/m², 2 x 20 g/m² Meltblownvliesstoff und Spinnvlies 17 g/m².

Beispiel 3: Entspricht einer erfindungsgemäßen Beutelwand umfassend ein vollständig plissiertes Vliesstoffmaterial und einer vollflächig ausgebildeten Fixiervorrichtung in Form eines Netzes mit einer Maschenweite von 5 mm x 5 mm. Die Faltenhöhe beträgt 12 mm. Die Beutelmaße (L x B) betrug 300 x 630 mm (ausgefaltet). Das SMMS bestehet aus Spinnvlies 35 g/m², 2 x 20 g/m² Meltblownvliesstoff und Spinnvlies 17 g/m².

Beispiel 4: Entspricht einer erfindungsgemäßen Beutelwand umfassend ein vollständig plissiertes Vliesstoffmaterial und einer Fixiervorrichtung in Form von mehreren beabstandeten Vliesstoffstreifen (Breite je 20 mm). Die Faltenhöhe beträgt 12 mm. Die Beutelmaße (L x B) betrug 300 x 630 mm (ausgefaltet). Das SMMS bestehet aus Spinnvlies 35 g/m², 2 x 20 g/m² Meltblownvliesstoff und Spinnvlies 17 g/m².

Beispiel 5: Entspricht einer erfindungsgemäßen Beutelwand umfassend ein vollständig plissiertes Vliesstoffmaterial und einer Fixiervorrichtung in Form von mehreren beabstandeten Vliesstoffstreifen (Breite je 20 mm). Die Faltenhöhe beträgt 12 mm. Die Beutelmaße (L x B) betrug 300 x 630 mm (ausgefaltet). Das SMMS bestehet aus Spinnvlies 35 g/m², 2 x 20 g/m² Meltblownvliesstoff und Spinnvlies 17 g/m². Der Staubsaugerfilterbeutel gemäß Beispiel 5 umfasst zusätzlich wenigstens ein Element zur Strömungsumlenkung oder Strömungsverteilung (14 Streifen mit je 11 mm Breite, Laminat mit einem Flächengewicht von 110 g/m²) im Staubsaugerfilterbeutel.

Wie in Figur 9 ersichtlich, weisen die Staubsaugerfilterbeutel mit einer Beutelwand umfassend ein wenigstens teilweise plissiertes Vliesstoffmaterial auch bei hohen Staubbeladungen einen größeren Volumenstrom auf, als ein Staubsaugerfilterbeutel mit einer Beutelwand ohne plissiertes Vliesstoffmaterial.

Durch die höhere Staubspeicherfähigkeit kann auch der Druckverlustanstieg des Staubsaugerfilterbeutels reduziert werden.

In Tabelle 1 sind Mittelwerte (aus 5 Messungen) des gemessenen Druckverlusts und der gemessenen Penetration eines Staubsaugerfilterbeutelmaterials gemäß des Stands der Technik aufgeführt mit einer Beutelwand aus einem Laminat aus einem Filamentspinnvliesstoff (Flächengewicht 35 g/m²), 2 Schichten Meltblownvliesstoff (Flächengewicht je 20 g/m²) und einem Filamentspinnvliesstoff (Flächengewicht 17 g/m²).

**Tabelle 1.**

| Gemessen mit TSI 8130 | Volumenstrom [l/min] | Druckverlust ΔP [mm H₂O] | Penetration [%] |
|---|---|---|---|
| Mittelwerte | 86,92 | 14,46 | 32,2 |

In Tabelle 2 sind Mittelwerte (aus 5 Messungen) des gemessenen Druckverlusts und der gemessenen Penetration eines Staubsaugerfilterbeutels mit einer Beutelwand aus einem plissierten Laminat aus einem Filamentspinnvliesstoff (Flächengewicht 35 g/m²), 2 Schichten Meltblownvliesstoff (Flächengewicht je 20 g/m²) und einem Filamentspinnvliesstoff (Flächengewicht 17 g/m²) angeführt.

**Tabelle 2.**

| Gemessen mit TSI 8130 | Volumenstrom [l/min] | Druckverlust ΔP [mm H₂O] | Penetration [%] |
|---|---|---|---|
| Mittelwerte | 42,98 | 6,86 | 18,72 |

Wie aus den Tabellen 1 und 2 ersichtlich, sind der Druckverlust und die Penetration bei einem Staubsaugerfilterbeutel mit einer wenigstens teilweise plissierten Beutelwand deutlich geringer als bei bekannten Staubsaugerfilterbeutel ohne plissierte Beutelwand.

In Tabelle 3 sind Mittelwerte (aus 2 Messungen) des gemessenen Druckverlusts und der gemessenen Penetration eines Staubsaugerfilterbeutels gemäß des Stands der Technik mit einer Beutelwand aus einem HEPA Laminat aus einem Filamentspinnvliesstoff (Flächengewicht 35 g/m²), 4 Schichten Meltblownvliesstoff (Flächengewicht je 19 g/m²) und einem Filamentspinnvliesstoff (Flächengewicht 17 g/m²) aufgeführt.

**Tabelle 3.**

| Gemessen mit TSI 8130 | Volumenstrom [l/min] | Druckverlust ΔP [mm H₂O] | Penetration [%] |
|---|---|---|---|
| Mittelwerte | 86,1 | 32,05 | 0,025 |

In Tabelle 4 sind Mittelwerte (aus 2 Messungen) des gemessenen Druckverlusts und der gemessenen Penetration eines Staubsaugerfilterbeutels mit einer plissierten Beutelwand aus einem HEPA Laminat aus einem Filamentspinnvliesstoff (Flächengewicht 35 g/m²), 4 Schichten Meltblownvliesstoff (Flächengewicht je 19 g/m²) und einem Filamentspinnvliesstoff (Flächengewicht 17 g/m²) aufgeführt.

**Tabelle 4.**

| Gemessen mit TSI 8130 | Volumenstrom [l/min] | Druckverlust ΔP [mm H₂O] | Penetration [%] |
|---|---|---|---|
| Mittelwerte | 43,05 | 15,5 | 0,004 |

Wie aus den Tabellen 3 und 4 ersichtlich, sind der Druckverlust und die Penetration bei einem Staubsaugerfilterbeutel mit einer wenigstens teilweise plissierten Beutelwand deutlich geringer als bei bekannten Staubsaugerfilterbeutel ohne plissierte Beutelwand. Die Verringerung der Penetration ist bei dem HEPA Laminat überproportional stärker als bei dem in Tabellen 1 und 2 verwendeten Laminat.

In Tabellen 1 und 2 bzw. 3 und 4 erkennt man auch einen geringeren Volumensstrom für eine Beutelwand aus einem plissierten Vliesstoffmaterial aufgrund der größeren Fläche einer solchen Beutelwand.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Insbesondere kann der Staubsaugerfilterbeutel in unterschiedlichen Geometrien und/oder Größen ausgebildet.

## Patentansprüche

1. Staubsaugerfilterbeutel mit einer Beutelwand aus Filtermaterial, die eine Durchgangsöffnung (102) aufweist, durch die zu reinigende Luft in den Staubsaugerfilterbeutel einströmen kann, wobei die Beutelwand ein wenigstens teilweise plissiertes Vliesstoffmaterial umfasst und wobei die Falten (101; 201; 301; 501; 601; 701; 801) des wenigstens teilweise plissierten Vliesstoffmaterials wenigstens teilweise mittels einer Fixiervorrichtung (205; 307; 405; 505; 705) miteinander verbunden sind;
**dadurch gekennzeichnet, dass**
die Fixiervorrichtung (205; 307; 405; 505; 705) wenigstens teilweise mit den Falten des wenigstens teilweise plissierten Vliesstoffmaterials verklebt und/oder verschweißt ist.

2. Staubsaugerfilterbeutel nach Anspruch 1, wobei sich Falten (101; 201; 301; 501; 601; 701; 801) des wenigstens teilweise plissierten Vliesstoffmaterials über die gesamte Länge oder Breite des Staubsaugerfilterbeutels erstrecken.

3. Staubsaugerfilterbeutel nach Anspruch 1 oder 2, wobei die Beutelwand eine erste und eine zweite Filtermateriallage umfasst, die durch eine umlaufende Schweißnaht miteinander verbunden sind, wobei die erste und/oder zweite Filtermateriallage das wenigstens teilweise plissierte Vliesstoffmaterial umfassen.

4. Staubsaugerfilterbeutel nach einem der vorangegangenen Ansprüche, wobei die Falten des wenigstens teilweise plissierten Vliesstoffmaterials eine Faltenhöhe zwischen 3 mm und 100 mm, insbesondere zwischen 3 mm und 50 mm, insbesondere zwischen 5 mm und 15 mm, aufweisen.

5. Staubsaugerfilterbeutel nach einem der vorangegangenen Ansprüche, wobei die Falten des wenigstens teilweise plissierten Vliesstoffmaterials eine Faltenbreite zwischen 3 mm und 100 mm, insbesondere zwischen 3 mm und 50 mm, insbesondere zwischen 5 mm und 15 mm, aufweisen.

6. Staubsaugerfilterbeutel nach einem der vorangegangenen Ansprüche, wobei wenigstens zwei Falten (101; 201; 301; 501; 601; 701; 801) des wenigstens teilweise plissierten Vliesstoffmaterials voneinander unterschiedliche Faltenhöhen und/oder Faltenbreiten aufweisen.

7. Staubsaugerfilterbeutel nach einem der vorangegangenen Ansprüche, außerdem umfassend wenigstens eine Seitenfalte (813; 814), wobei das wenigstens teilweise plissierte Vliesstoffmaterial in der wenigstens einen Seitenfalte angeordnet ist.

8. Staubsaugerfilterbeutel nach einem der vorangegangenen Ansprüche, wobei wenigstens zwei Falten (101; 201; 301; 501; 601; 701; 801) des wenigstens teilweise plissierten Vliesstoffmaterials eine voneinander unterschiedliche Faltenform aufweisen.

9. Staubsaugerfilterbeutel nach Anspruch 1, wobei die Fixiervorrichtung (205; 307; 405; 505; 705) in Anströmrichtung anströmseitig und/oder abströmseitig des wenigstens teilweise plissierten Vliesstoffmaterials angeordnet ist.

10. Staubsaugerfilterbeutel nach einem der Ansprüche 1 oder 9, wobei die Fixiervorrichtung (205; 307; 405; 505; 705) wenigstens einen Materialstreifen, insbesondere einen Vliesstoffmaterialstreifen, umfasst.

11. Staubsaugerfilterbeutel nach einem der Ansprüche 1, 9 oder 10, wobei die Fixiervorrichtung (205; 307; 405; 505; 705) ein vorherbestimmtes Dehnungsverhalten aufweist.

12. Staubsaugerfilterbeutel nach einem der Ansprüche 1, 9, 10 oder 11, wobei in einem durch die Fixiervorrichtung (205; 307; 405; 505; 705) und den Faltenschenkeln wenigstens einer Falte des wenigstens teilweise plissierten Vliesstoffmaterials gebildeten Hohlraum, Fasern (711) und/oder Absorbentien (712) angeordnet sind.

## Claims

1. Vacuum cleaner filter bag with a bag wall made of filter material that has a through passage (102) through which the air that is to be cleaned can flow into the vacuum cleaner filter bag, wherein the bag wall comprises an at least partially pleated nonwoven material wherein the folds (101; 201; 301; 501; 601; 701; 801) of the at least partially pleated nonwoven material are connected to one another at least partially by means of a fixing device (205; 307; 405; 505; 705);
**characterized in that**
the fixing device (205; 307; 405; 505; 705) is glued and / or welded at least partially to the folds of the at least partially pleated nonwoven material.

2. Vacuum cleaner filter bag according to Claim 1 wherein folds (101; 201; 301; 501; 601; 701; 801) of the at least partially pleated nonwoven material extend across the entire length or width of the vacuum cleaner filter bag.

3. Vacuum cleaner filter bag according to Claim 1 or 2, wherein the bag wall comprises a first and a second filter material layer that are connected to each other by means of a peripheral weld seam, wherein the first and / or the second filter material layer comprises the at least partially pleated nonwoven material.

4. Vacuum cleaner filter bag according to one of the preceding claims wherein the folds of the at least partially pleated nonwoven material have a fold height between 3 mm and 100 mm, particularly between 3 mm and 50 mm, particularly between 5 mm and 15 mm.

5. Vacuum cleaner filter bag according to one of the preceding claims wherein the folds of the at least partially pleated nonwoven material have a fold width between 3 mm and 100 mm, particularly between 3 mm and 50 mm, particularly between 5 mm and 15 mm.

6. Vacuum cleaner filter bag according to one of the preceding claims wherein at least two folds (101; 201; 301; 501; 601; 701; 801) of the at least partially pleated nonwoven material have fold heights and / or fold widths that are different from each other.

7. Vacuum cleaner filter bag according to one of the preceding claims, furthermore comprising at least one side fold (813; 814), wherein the at least partially pleated nonwoven material is arranged in the at least one side fold.

8. Vacuum cleaner filter bag according to one of the preceding claims wherein at least two folds (101; 201; 301; 501; 601; 701; 801) of the at least partially pleated nonwoven material have fold shapes that differ from one another.

9. Vacuum cleaner filter bag according to Claim 1 wherein the fixing device (205; 307; 405; 505; 705) is arranged in the direction of flow on the upstream side and / or on the downstream side of the at least partially pleated nonwoven material.

10. Vacuum cleaner filter bag according to Claim 1 or 9 wherein the fixing device (205; 307; 405; 505; 705) comprises at least one material strip, particularly a nonwoven material strip.

11. Vacuum cleaner filter bag according to Claim 1, 9 or 10 wherein the fixing device (205; 307; 405; 505; 705) has a predetermined expansion behaviour.

12. Vacuum cleaner filter bag according to Claim 1, 9, 10 or 11 wherein fibres (711) and / or absorbents (712) are arranged in the hollow space formed by the fixing device (205; 307; 405; 505; 705) and the fold legs of at least one fold of the at least partially pleated nonwoven material.

## Revendications

1. Sac filtrant d'aspirateur comprenant une paroi de sac en un matériau filtrant, qui présente une ouverture de passage (102) à travers laquelle l'air à purifier peut s'écouler à l'intérieur du sac filtrant d'aspirateur, la paroi de sac comportant un matériau de non-tissé au moins partiellement plissé, et les plis (101; 201; 301; 501; 601; 701; 801) du matériau de non-tissé au moins partiellement plissé étant reliés au moins partiellement au moyen d'un dispositif de fixation (205; 307; 405; 505; 705);
**caractérisé en ce que**
le dispositif de fixation (205; 307; 405; 505; 705) est au moins partiellement collé et/ou soudé aux plis du matériau de non-tissé au moins partiellement plissé.

2. Sac filtrant d'aspirateur selon la revendication 1, dans lequel les plis (101; 201; 301; 501; 601; 701; 801) du matériau de non-tissé au moins partiellement plissé s'étendent sur toute la longueur ou largeur du sac filtrant d'aspirateur.

3. Sac filtrant d'aspirateur selon la revendication 1 ou la revendication 2, dans lequel la paroi de sac comprend une première et une deuxième couche de matériau filtrant, qui sont reliées mutuellement par un joint soudé périphérique, la première et/ou la deuxième couche de matériau filtrant comprenant le matériau de non-tissé au moins partiellement plissé.

4. Sac filtrant d'aspirateur selon l'une des revendications précédentes, dans lequel les plis du matériau de non-tissé au moins partiellement plissé présentent une hauteur de pli entre 3 mm et 100 mm, notamment entre 3 mm et 50 mm, et en particulier entre 5 mm et 15 mm.

5. Sac filtrant d'aspirateur selon l'une des revendications précédentes, dans lequel les plis du matériau de non-tissé au moins partiellement plissé présentent une largeur de pli entre 3 mm et 100 mm, notamment entre 3 mm et 50 mm, et en particulier entre 5 mm et 15 mm.

6. Sac filtrant d'aspirateur selon l'une des revendications précédentes, dans lequel au moins deux plis (101; 201; 301; 501; 601; 701; 801) du matériau de non-tissé au moins partiellement plissé, présentent des hauteurs de plis et/ou des largeurs de plis respectivement différentes.

7. Sac filtrant d'aspirateur selon l'une des revendications précédentes, comprenant en outre au moins un pli latéral (813; 814), sac dans lequel le matériau de non-tissé au moins partiellement plissé est agencé dans ledit au moins un pli latéral.

8. Sac filtrant d'aspirateur selon l'une des revendications précédentes, dans lequel au moins deux plis (101; 201; 301; 501; 601; 701; 801) du matériau de non-tissé au moins partiellement plissé, présentent une forme de pli respectivement différente.

9. Sac filtrant d'aspirateur selon la revendication 1, dans lequel le dispositif de fixation (205; 307; 405; 505; 705) peut être agencé, en se référant à la direction d'écoulement, du côté amont et/ou du côté aval du matériau de non-tissé au moins partiellement plissé.

10. Sac filtrant d'aspirateur selon l'une des revendications 1 ou 9, dans lequel le dispositif de fixation (205; 307; 405; 505; 705) comprend au moins une bande de matériau, notamment une bande de matériau de non-tissé.

11. Sac filtrant d'aspirateur selon l'une des revendications 1, 9 ou 10, dans lequel le dispositif de fixation (205; 307; 405; 505; 705) présente un comportement à l'allongement déterminé à l'avance.

12. Sac filtrant d'aspirateur selon l'une des revendications 1, 9, 10 ou 11, dans lequel des fibres (711) et/ou des absorbants (712) sont placés à l'intérieur d'une cavité formée par le dispositif de fixation (205; 307; 405; 505; 705) et les flancs de pli d'au moins un pli du matériau de non-tissé au moins partiellement plissé.
